# EUROPEAN PATENT SPECIFICATION

(11) **EP 3 043 428 B1**
(45) Date of publication and mention of the grant of the patent: **24.07.2019**
(21) Application number: 16150550.8
(22) Date of filing: 08.01.2016
(51) Int. Cl.: H01S 3/04, H01S 3/02, B23K 26/36, B23K 26/70, H01S 3/034

(54) **DEVICE FOR LASER MARKING OF PRODUCTS**
VORRICHTUNG ZUR LASERMARKIERUNG VON PRODUKTEN
DISPOSITIF POUR LE MARQUAGE LASER DE PRODUITS

(30) Priority: 09.01.2015 ES 201530021
(43) Date of publication of application: 13.07.2016
(73) Proprietor: Macsa ID, S.A., 08272 Sant Fruitos de Bages (Barcelona) (ES)
(72) Inventor: VOGLER, Sven Alexander, 08242 MANRESA (BARCELONA) (ES); CAMPS CLARAMUNT, Joan, 08242 MANRESA (BARCELONA) (ES); BRAVO MONTERO, Francesc, 08242 MANRESA (BARCELONA) (ES)
(74) Representative: Durán-Corretjer, S.L.P.

(56) References cited:
- CN-A- 101 702 485
- US-A- 5 331 652
- US-A1- 2005 254 537
- US-B2- 6 843 306
- US-B2- 7 715 454
- "NOT QUITE SMALL ENOUGH TO FIT IN YOUR POCKET BUT AT A PRICE WHICH YOU CAN AFFORD 776mm NANO by MACSA", , 25 March 2014 (2014-03-25), XP055258185, Retrieved from the Internet: URL:http://www.codipack.com/wp-content/upl oads/2014/03/Nano.pdf [retrieved on 2016-03-14]
- ANONYMOUS: "Air cleaning of imaging lens", RESEARCH DISCLOSURE, MASON PUBLICATIONS, HAMPSHIRE, GB, vol. 268, no. 72, 1 August 1986 (1986-08-01), XP007110925, ISSN: 0374-4353
- PARENTI R ET AL: "Industrialized real-time flame thermal mapping system with off-line correction of spatial error", INDUSTRIAL ELECTRONICS, CONTROL AND INSTRUMENTATION,, vol. 3, 5 September 1994 (1994-09-05), pages 1977-1980, XP010137690, DOI: 10.1109/IECON.1994.398122 ISBN: 978-0-7803-1328-6
- CHEN-LI SUN ET AL: "Active mixing in diverging microchannels", MICROFLUIDICS AND NANOFLUIDICS, SPRINGER, BERLIN, DE, vol. 8, no. 4, 29 July 2009 (2009-07-29), pages 485-495, XP019785752, ISSN: 1613-4990

## Description

The present invention relates to the field of devices for the laser marking and industrial coding of products. In particular, the present invention relates to the cooling system that incorporates a device of this type, also known as a laser marking device.

The cooling systems of the laser marking devices known in the prior art, for instance the NANO marking laser device of MACSA, take in air from the front area of the appliance, this being the area that usually houses the lens through which the laser beam is projected towards the exterior of the device, and cause this air to pass through the interior of the device towards the rear part, i.e. opposite to the front part, where the air is expelled to the outside of the device. A problem with this type of cooling system lies in the fact that the front area of the device is the area that tends to contain the most dust and dirt due to its operation, so that the air that enters the appliance is dirty.

Additionally, to reduce the amount of dirt from the air taken in through the front of the device it is necessary to use filters. However, despite the use of filters, the entry of dust and/or dirt into the interior of the device is inevitable, and this results in a reduction of its durability due to low protection of the device against penetration by dust and/or foreign bodies, according to the IP (Internal Protection) indices defined in the international standard IEC 60529.

In such systems, the air usually passes through the whole of the interior of the device, entering into contact both with the laser generator and with the electronic systems of the laser marking device. In this case, the dirt that enters from the outside therefore affects all the systems that are contained inside the device. Moreover, the laser generator gives off more heat than the other components, so that this ventilation arrangement does not appear to be the most efficient, since it cools in equal measure the whole of a unit that has, in reality, different cooling needs.

Additionally, the lens of a laser marking device tends to accumulate dirt during the operation of the device. Consequently, in many cases, the only way of cleaning the lens is by removing it from the device, and this can result in it being stopped at inopportune moments, such as for example during its operation for marking or engraving products in a production line.

In view of the above, an aim of the present invention is to solve the disadvantages of the known systems for the cooling of laser marking devices.

According to the present invention, this is accomplished by a device for the laser marking of products as defined in claim 1. Further optional embodiments are defined in claims 2-8.

In the device of the present invention, the outer casing defines an internal volume through which the air flows. The said internal volume has, in turn, another completely closed volume containing the electronic and control devices, with no air inlet or outlet. In the said closed volume, the air is recirculated by a number of fans so that the warm air comes into contact with a heat exchanger provided with fins on both sides. The said exchanger has one face in the closed volume of the electronic systems and another face in the said internal volume through which the air passes. The heat absorbed in the volume of the electronic and control devices is transmitted via the exchanger to its other face so that it is dissipated by the air.

The internal volume contains only the laser generator and is the only internal volume of the appliance through which air from the exterior enters and exits. The said volume is open through the rear and front parts of the appliance, as in the known devices of the prior art. However, in the present invention the air flow is in the reverse direction: the air enters the device through the rear part, this being an area where the air is cleaner, and exits the device through the front part, which is where most of the dirt accumulates in the device. It is not necessary for the air inlets and outlets to be sealed, since the laser generator is covered by a protector that seals its interior.

A fan arranged adjacent to the air inlet generates the flow of cooling air. Optionally, a fan (not illustrated) can be added, arranged adjacent to the air outlet, which can replace the fan arranged at the air inlet or function as a complement to the fan at the air inlet.

As a consequence of the entry of clean air through the rear area of the device and the protection of the laser generator, the insulation and therefore the durability of the said generator are greater than in laser generators of the known devices. The same is true for the electronic and control devices due to the fact that they are situated inside a completely closed volume.

Additionally, the device comprises a bypass situated adjacent to the rear air inlet which diverts air from the internal volume of the device to a pipe formed in the extrusion of the casing of the device. This air passes through the entire device via the said pipe until it reaches the opening where the laser lens is situated. In this way, the air coming from the rear part of the device also serves to clean the lens in a simple manner, preventing the accumulation of dirt on the lens. It is therefore not necessary to stop the operation of the apparatus in order to perform this task. The diversion takes place in the rear part of the device in order to take advantage of the large difference in pressure and ensure that the air arrives at the lens with sufficient force.

The air-cooling of the device according to the present invention is more effective than in the devices known from the prior art, because the dissipating effect of the air is focused on the laser generator, which is the component of the device that gives off the most heat. The heat exchanger ensures that the cooling air also cools the electronic components area, which generates heat to a lesser degree.

To allow a clearer understanding, by way of explanatory and non-limitative example, some drawings are attached of an embodiment of the laser marking device and its cooling system forming the subject of the present invention.

Figures 1a to 1c provide different views of an embodiment of a laser marking device according to the present invention: Figure 1a shows a perspective view of the device; Figure 1b shows a plan view of the lower part of the device; and Figure 1c shows a rear view of the device.

Figure 2 shows a top plan view of an embodiment of a laser marking device according to the present invention, with its outer casing removed.

Figure 3 shows a longitudinal cross-section of an embodiment of a laser marking device with no outer casing at the level of the pipe, through the plane III -- III of Figure 1b.

Figure 4 shows a perspective view of an embodiment of a laser marking device with no outer casing, according to the present invention.

Figure 5 shows a transverse cross-section of an embodiment of a laser marking device with no outer casing at the level of the lens, through the plane V-V of Figure 1b.

Figure 6 shows another transverse cross-section of an embodiment of a laser marking device mid-way along its length, through the plane VI - VI of Figure 1b.

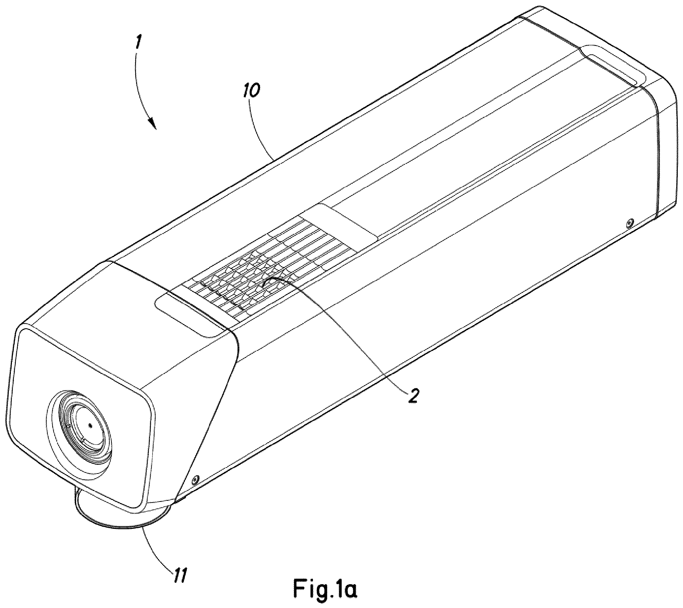

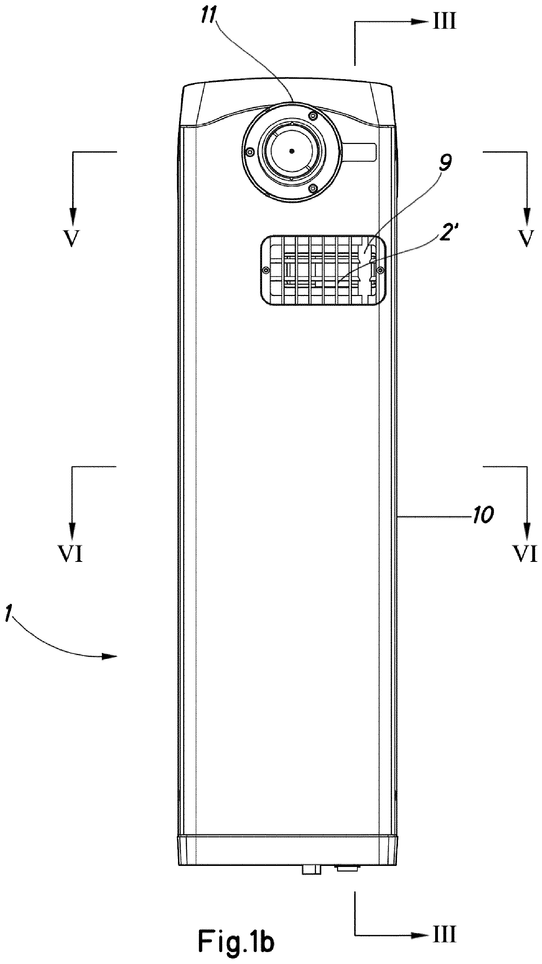

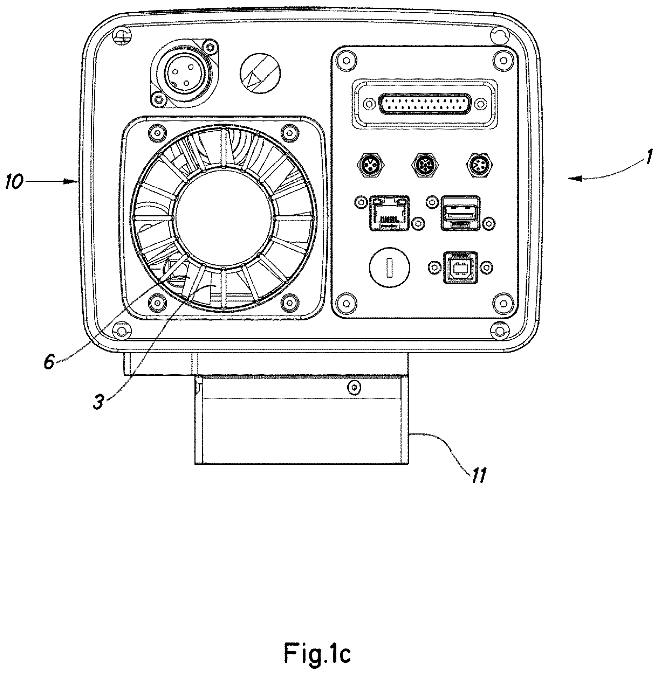

Figures 1a, 1b and 1c show the laser marking device -1-, which has an outer casing -10-. The interior of the said casing -10- accumulates heat due to the operation of the different elements or components contained in its interior. In order to cool the interior of the casing -10-, the casing has an air inlet -3-, arranged in the rear part of the device -1- as shown in Figure 1c, and two air outlets -2, 2'-, arranged in the upper and lower parts of the front part of the device -1- and shown in Figures 1a and 1b.

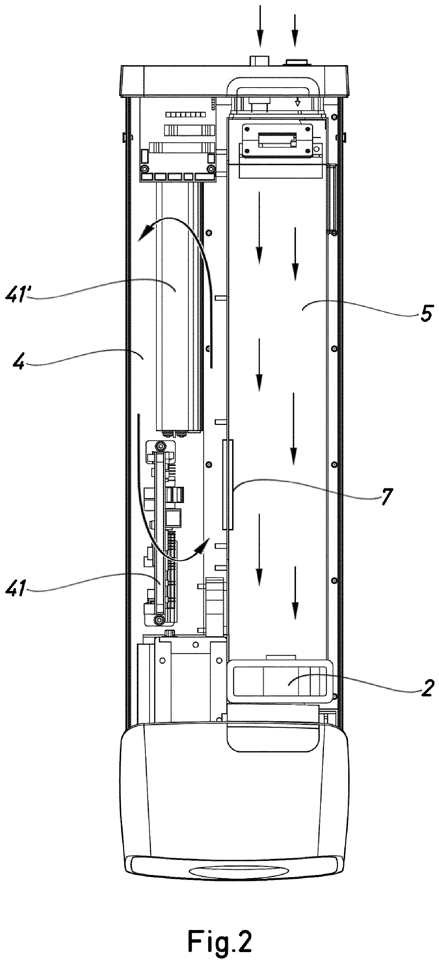

Figure 2 shows the interior of the casing -10-, which when the casing is in place has a closed volume -4- and a volume -5- communicating with the exterior via the said air inlet -3- and the said air outlets -2, 2'-. A fan -6-situated in the rear part of the device introduces air from the exterior of the device -1- to the interior of the same via the air inlet -3-, allowing the air to enter into the volume -5- and pass through the same to the air outlets -2, 2'-. The laser generator (not illustrated) is situated in the interior of the volume -5-, so that the air circulation dissipates the heat given off by the said generator.

In the interior of the closed volume -4- are situated the electronic components -41, 41'- of the device -1-, whose operation also gives off heat, albeit to a lesser degree than the laser generator. A number of fans (not illustrated) allow the air to be recirculated through the interior of the closed volume. Additionally, the device -1- comprises a heat exchanger -7- with fins on two faces, one of the faces of the exchanger -7- being situated inside the closed volume -4- and the other face of the exchanger -7- being situated inside the internal volume -5-. In this way, the exchanger -7- transfers the heat generated in the interior of the closed volume -4- to the internal volume -5-, and the said heat is dissipated thanks to the air circulation that takes place in the interior of the said internal volume -5-.

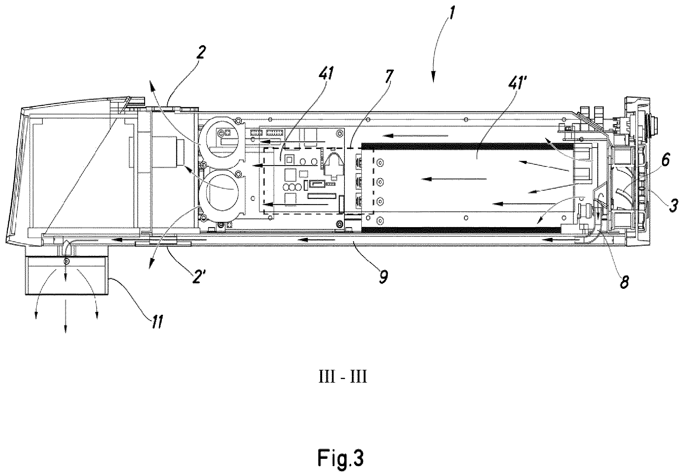

In the longitudinal cross-section of the device -1- shown in Figure 3 can be seen a bypass -8- situated adjacent to the air inlet -3- and in the interior of the internal volume -5-, which connects with a pipe -9- that runs longitudinally along the interior of the casing to an opening -11- where the laser output lens is situated. Through the said pipe -9- is diverted air from the exterior of the device -1-, and the said air passes along the said pipe -9- towards the opening -11- where the laser lens is situated, subjecting the lens to a current of air that prevents the accumulation of dirt.

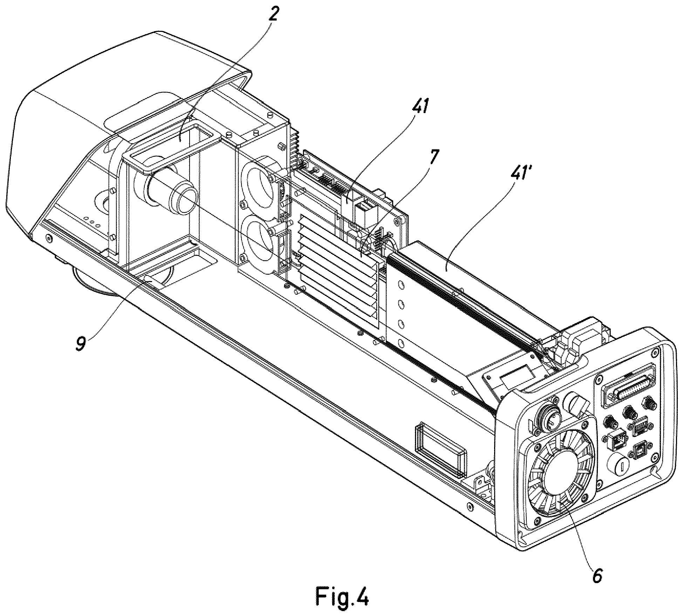

The arrows shown in Figures 3 and 4 represent the flow of cooling air.

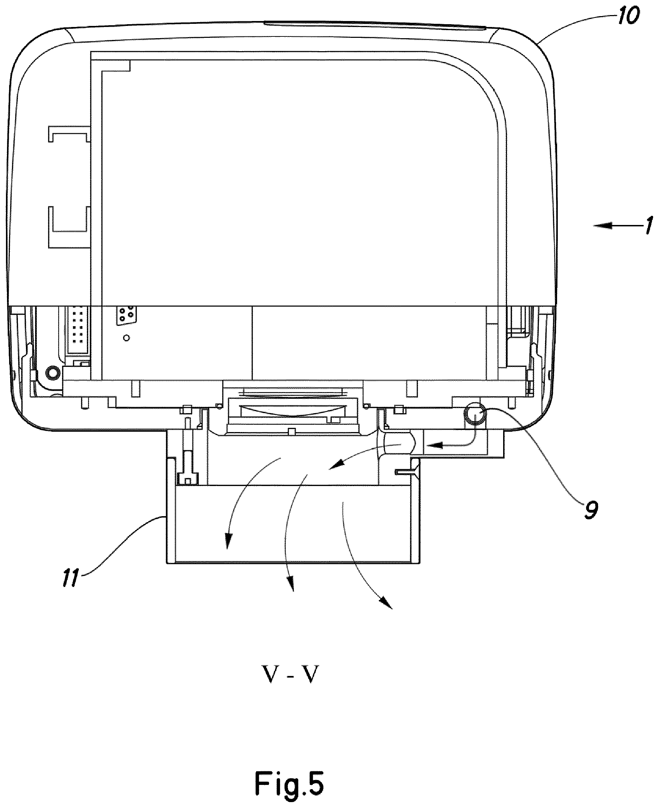

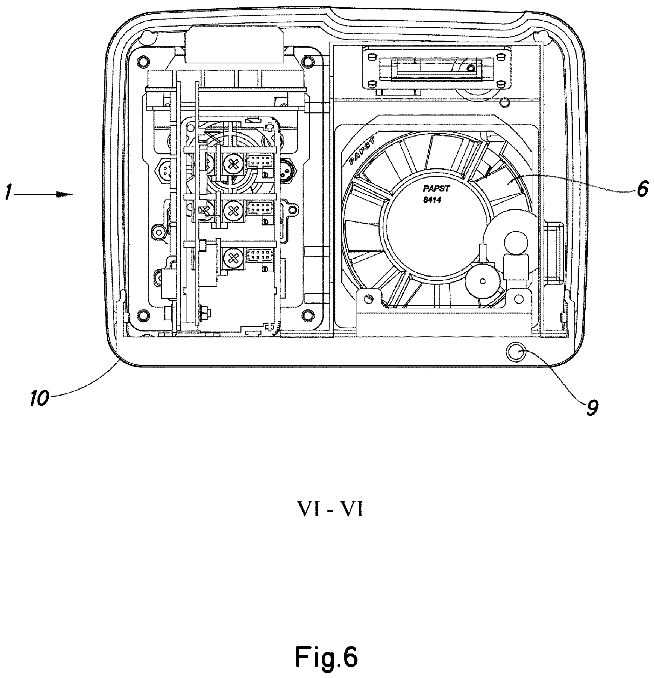

Figure 4 shows in greater detail the passage of the pipe 9 through the lower outlet -2'-. As shown in Figure 5, the lens is connected with the said pipe -9- in order to allow the air that arrives through the said pipe 9 to be blown on to the lens, thus allowing it to be cleaned and ventilated. The said pipe -9- forms part of the casing as mentioned previously and as shown in Figure 6.

Although the invention has been described with respect to a preferred embodiment, the said embodiment must not be regarded as limitative of the invention, which will be defined the claims.

## Claims

1. Device for laser marking of products comprising an outer casing (10) defining at least one internal volume, the said internal volume (5) comprising:
- at least one laser beam generating source,
- at least one optical system for outputting the laser beam,
- electronic and control means (41, 41') of the device, wherein
said outer casing additionally comprises at least one air inlet (3), at least one air outlet (2), and at least one fan (6) for generating a flow of air for cooling the laser beam generating source and the electronic and control means of the device, said air flowing through said internal volume between said air inlet and said air outlet, said air inlet being more distant from an opening (11) in the outer casing for outputting the laser beam than the air outlet is,
**characterised in that**
said internal volume comprises a closed volume (4) containing said electronic and control means, said closed volume comprising a heat exchanger (7) which communicates thermally with said air flow that passes through said internal volume but not in said closed volume.

2. Device for the laser marking of products, according to claim 1, **characterised in that** the optical system is arranged in a first frontal end of the device and **in that** the air inlet is arranged in a second rear end of the device, opposite to the said first end, allowing a flow of air through said internal volume towards said air outlet, said air outlet being arranged in an area closer to the optical system than the air inlet.

3. Device for the laser marking of products, according to claim 2, **characterised in that** the fan is arranged adjacent to the air inlet.

4. Device for the laser marking of products, according to claim 2, **characterised in that** the fan is arranged adjacent to the air outlet.

5. Device for the laser marking of products, according to claim 2, **characterised in that** it comprises a fan adjacent to the air inlet and a fan adjacent to the air outlet.

6. Device according to claim 1, **characterised in that** said closed volume comprises ventilation means to allow the circulation of air inside said closed volume.

7. Device according to any one of the preceding claims, **characterised in that** the optical system comprises at least one laser beam output lens.

8. Device according to any one of claims 1 to 7, **characterised in that** said internal volume comprises a bypass (8), adjacent to the air inlet, that connects with a pipe (9) that runs longitudinally along the interior of the outer casing to an opening (11) where the laser output lens is situated, allowing the circulation of air through said pipe from the air inlet to said opening.

## Patentansprüche

1. Vorrichtung zum Lasermarkieren von Produkten, umfassend ein Außengehäuse (10), das zumindest einen Innenraum definiert, wobei der Innenraum (5) umfasst:
- mindestens eine Laserstrahlerzeugungsquelle,
- mindestens ein optisches System zur Ausgabe des Laserstrahls,
- elektronische und Steuermittel (41, 41') der Vorrichtung, wobei das Außengehäuse zusätzlich mindestens einen Lufteinlass (3), mindestens einen Luftauslass (2) und mindestens einen Lüfter (6) zum Erzeugen eines Luftstroms zum Kühlen der Laserstrahlerzeugungsquelle und der elektronischen und Steuermittel der Vorrichtung umfasst, wobei die Luft durch den Innenraum zwischen dem Lufteinlass und dem Luftauslass strömt, wobei der Lufteinlass weiter von einer Öffnung (11) im Außengehäuse zur Ausgabe des Laserstrahls entfernt ist als der Luftauslass,
**dadurch gekennzeichnet, dass** der Innenraum einen in sich geschlossenen Raum (4) umfasst, der die elektronischen und Steuermittel enthält, wobei der in sich geschlossene Raum einen Wärmetauscher (7) umfasst, der thermisch mit dem Luftstrom verbunden ist, der den Innenraum, aber nicht den in sich geschlossenen Raum durchströmt.

2. Vorrichtung zur Lasermarkierung von Produkten nach Anspruch 1, **dadurch gekennzeichnet, dass** das optische System an einem ersten vorderen Ende der Vorrichtung angeordnet ist und dass der Lufteinlass an einem zweiten hinteren Ende der Vorrichtung dem ersten Ende gegenüberliegend angeordnet ist, wodurch ein Luftstrom durch den Innenraum in Richtung des Luftauslasses ermöglicht wird, wobei der Luftauslass in einem Bereich angeordnet ist, der dem optischen System näher ist als der Lufteinlass.

3. Vorrichtung zur Lasermarkierung von Produkten nach Anspruch 2, **dadurch gekennzeichnet, dass** der Lüfter dem Lufteinlass benachbart angeordnet ist.

4. Vorrichtung zur Lasermarkierung von Produkten nach Anspruch 2, **dadurch gekennzeichnet, dass** der Lüfter dem Luftauslass benachbart angeordnet ist.

5. Vorrichtung zur Lasermarkierung von Produkten nach Anspruch 2, **dadurch gekennzeichnet, dass** die Vorrichtung einen dem Lufteinlass benachbarten Lüfter und einen dem Luftauslass benachbarten Lüfter umfasst.

6. Vorrichtung nach Anspruch 1, **dadurch gekennzeichnet, dass** der in sich geschlossene Raum eine Belüftungseinrichtung umfasst, um die Zirkulation von Luft in dem in sich geschlossenen Raum zu ermöglichen.

7. Vorrichtung nach einem der vorangegangenen Ansprüche, **dadurch gekennzeichnet, dass** das optische System zumindest eine Laserstrahl-Ausgangslinse umfasst.

8. Vorrichtung nach einem der Ansprüche 1 bis 7, **dadurch gekennzeichnet, dass** das Innenvolumen einen Bypass (8) umfasst, der dem Lufteinlass benachbart ist und mit einem Rohr (9) verbunden ist, das in Längsrichtung entlang des Inneren des Außengehäuses zu einer Öffnung (11) verläuft, in der die Laseraustrittslinse angeordnet ist, wodurch die Zirkulation von Luft durch das Rohr von dem Lufteinlass zu der Öffnung ermöglicht wird.

## Revendications

1. Dispositif pour le marquage laser de produits, comprenant un boîtier extérieur (10) définissant au moins un volume interne, ledit volume interne (5) comprenant :
- au moins une source de génération de faisceau laser,
- au moins un système optique pour la sortie du faisceau laser,
- des moyens électroniques et de commande (41, 41') du dispositif,
dans lequel
ledit boîtier extérieur comprend en outre au moins une entrée d'air (3),
au moins une sortie d'air (2),
et au moins un ventilateur (6) pour générer un flux d'air pour refroidir la source de génération de faisceau laser et les moyens électroniques et de commande du dispositif, ledit air s'écoulant à travers ledit volume interne entre ladite entrée d'air et ladite sortie d'air, ladite entrée d'air étant à plus grande distance vis-à-vis d'une ouverture (11) dans le boîtier extérieur pour la sortie du faisceau laser que ne l'est la sortie d'air,
**caractérisé en ce que**
ledit volume interne comprend un volume fermé (4) contenant lesdits moyens électroniques et de commande, ledit volume fermé comprenant un échangeur de chaleur (7) qui communique thermiquement avec ledit flux d'air qui passe à travers ledit volume interne mais pas dans ledit volume fermé.

2. Dispositif pour le marquage laser de produits, selon la revendication 1, **caractérisé en ce que** le système optique est situé dans une première extrémité frontale du dispositif et **en ce que** l'entrée d'air est disposée dans une seconde extrémité postérieure du dispositif, à l'opposé de ladite première extrémité, permettant qu'un flux d'air traverse ledit volume interne en direction de ladite sortie d'air, ladite sortie d'air étant disposée dans une zone plus proche du système optique que l'entrée d'air.

3. Dispositif pour le marquage laser de produits, selon la revendication 2, **caractérisé en ce que** le ventilateur est disposé adjacent à l'entrée d'air.

4. Dispositif pour le marquage laser de produits, selon la revendication 2, **caractérisé en ce que** le ventilateur est disposé adjacent à la sortie d'air.

5. Dispositif pour le marquage laser de produits, selon la revendication 2, **caractérisé en ce qu'**il comprend un ventilateur adjacent à l'entrée d'air et un ventilateur adjacent à la sortie d'air.

6. Dispositif selon la revendication 1, **caractérisé en ce que** ledit volume fermé comprend des moyens de ventilation pour permettre la circulation d'air à l'intérieur dudit volume fermé.

7. Dispositif selon l'une quelconque des revendications précédentes, **caractérisé en ce que** le système optique comprend au moins une lentille de sortie de faisceau laser.

8. Dispositif selon l'une quelconque des revendications 1 à 7, **caractérisé en ce que** ledit volume interne comprend une dérivation (8), adjacente à l'entrée d'air, qui se raccorde à un tuyau (9) qui s'étend longitudinalement le long de l'intérieur du boîtier extérieur jusqu'à une ouverture (11) dans laquelle la lentille de sortie du laser est placée, permettant la circulation d'air à travers ledit tuyau depuis l'entrée d'air jusqu'à ladite ouverture.
